# FASCICULE DE BREVET EUROPEEN

(11) **EP 3 874 326 B1**
(45) Date de publication et mention de la délivrance du brevet: **16.08.2023**
(21) Numéro de dépôt: 19782614.2
(22) Date de dépôt: 08.10.2019
(51) Int. Cl.: G02F 1/1333, B60R 1/04, B60R 1/12

(54) **RETROVISEUR INTELLIGENT POUR VEHICULE AUTOMOBILE**
INTELLIGENTER RÜCKSPIEGEL FÜR EIN KRAFTFAHRZEUG
INTELLIGENT REARVIEW MIRROR FOR A MOTOR VEHICLE

(30) Priorité: 31.10.2018 FR 1860126
(43) Date de publication de la demande: 08.09.2021
(73) Titulaire: Valeo Comfort and Driving Assistance, 94000 Créteil (FR)
(72) Inventeur: BLANC, Eric, 94046 Créteil CEDEX (FR); BISSON, Jean-Francois, 94046 Créteil CEDEX (FR); BEN NACHOUANE, Ayoub, 94046 Créteil CEDEX (FR); NOLL, Regis, 94046 Créteil CEDEX (FR); CAVALADE, Blaise, 94046 Créteil CEDEX (FR); PHAM, Binh Xuan, 94046 Créteil CEDEX (FR); KORCZAK, Stephane, 94046 Créteil CEDEX (FR); BONNEVILLE, Laurent, 94046 Créteil CEDEX (FR)
(74) Mandataire: Delplanque, Arnaud
(86) Numéro de dépôt international: PCT/EP2019/077150
(87) Numéro de publication internationale: WO 2020/088891

(56) Documents cités:
- WO-A2-2007/053710
- CN-U- 205 044 633
- CN-U- 205 890 716
- CN-U- 207 826 105
- US-A1- 2018 067 279

## Description

### DOMAINE TECHNIQUE AUQUEL SE RAPPORTE L'INVENTION

La présente invention concerne un rétroviseur intelligent pour véhicule automobile.

### ARRIERE-PLAN TECHNOLOGIQUE

Certains véhicules sont de nos jours équipés de rétroviseurs intelligents qui jouent le rôle d'un rétroviseur classique tout en permettant l'affichage de certaines informations destinées notamment au conducteur du véhicule.

Un rétroviseur intelligent comporte un dispositif d'affichage vidéo logé dans une coque de rétroviseur. Le dispositif d'affichage vidéo comprend une matrice constituée d'éléments dont la transmittance varie de façon contrôlée au cours du temps, en général un afficheur à cristaux liquides (ou LCD pour « Liquid Cristal Display »), par exemple avec des transistors en couches minces (TCM) ou « Thin-film transistor » en anglais (TFT). De façon connue, une face arrière de la matrice est éclairée par une source de lumière, afin de projeter une image sur un miroir partiellement transparent qui obture une ouverture principale de la coque de rétroviseur. Le miroir comporte une face avant, orientée vers l'extérieur de la coque de rétroviseur, traitée de sorte à réfléchir la lumière ambiante et ainsi servir de rétroviseur.

Afin de protéger les composants électroniques composant le dispositif d'affichage vidéo, sensibles à la poussière et aux projections d'eau, la coque de rétroviseur est close de façon hermétique. Or le dispositif d'affichage vidéo (en particulier la carte graphique équipant généralement celui-ci et la source lumineuse) produit de la chaleur. Au cours du temps, cette chaleur s'accumule entre le support de la source de lumière et la matrice. Au-delà d'une température critique, les performances du dispositif d'affichage vidéo se dégradent ou pire, ses composants électroniques se détériorent. Ce phénomène d'accumulation de chaleur est amplifié lorsque le rétroviseur intelligent est soumis à un fort ensoleillement. La température à l'intérieur de la coque de rétroviseur peut ainsi rapidement dépasser une température de fonctionnement critique, au-delà de laquelle le rétroviseur ne fonctionne plus convenablement. Le document WO 2007/053710 A2 divulgue un rétroviseur conforme au préambule de la revendication 1.

### OBJET DE L'INVENTION

Afin de résoudre les inconvénients mentionnés ci-dessus, la présente invention propose un rétroviseur intelligent pour véhicule automobile, comprenant les caractéristiques de la revendication 1.

D'autres caractéristiques, non limitatives et avantageuses du rétroviseur intelligent conforme à l'invention, sont les suivantes :
- les bords de l'ouverture secondaire entourent le radiateur thermique de sorte à empêcher le passage de poussière et de projection d'eau entre la coque de rétroviseur et le radiateur thermique ;
- les bords de l'ouverture secondaire entourent le radiateur thermique pour que l'étanchéité entre la coque de rétroviseur et radiateur thermique soit conforme à la norme IP42 ;
- l'écart entre les bords de l'ouverture secondaire et le radiateur thermique est inférieur à 1 mm, de préférence compris entre 0,8 mm et 1 mm ;
- les bords de l'ouverture secondaire sont distants de chaque côté du radiateur thermique ;
- le radiateur thermique est composé d'un thermoplastique (le radiateur thermique pouvant en variante être métallique, par exemple en aluminium ou en alliage à base d'aluminium) ;
- le thermoplastique à une conductivité thermique égale ou supérieure à 10 W.m⁻¹.K⁻¹, de préférence égale ou supérieure à 20 W.m⁻¹.K⁻¹ et/ou une émissivité égale ou supérieure à 0,4, de préférence égale ou supérieure à 0,9 ;
- le radiateur est fixé sur la carte électronique ;
- le radiateur est fixé sur la coque ;
- la carte électronique est une carte graphique, cette carte graphique portant par exemple un processeur graphique ;
- un guide de lumière est interposé entre la carte électronique et la matrice (ce guide de lumière étant éclairé par la source de lumière) ;
- la base a une forme de plaque ;
- les bords de la base (c'est-à-dire la tranche de la plaque formant la base) s'étendent au contact de la coque (par exemple sur tout le pourtour de la base), ce qui permet que la base forme une protection pour le dispositif d'affichage vis-à-vis de l'extérieur ;
- l'ouverture secondaire entoure toutes les ailettes du radiateur thermique ; les sommets de toutes les ailettes affleurent la surface extérieure de la coque de rétroviseur ;
- les ailettes s'étendent perpendiculairement ou sensiblement perpendiculairement à la face de la coque de rétroviseur délimitant l'ouverture secondaire ;
- l'ouverture secondaire est située au niveau d'une face arrière de la coque de rétroviseur ;
- la surface extérieure de la coque de rétroviseur et/ou du radiateur thermique est recouverte par une couche de nature métallique, de préférence par du magnésium ou de l'aluminium.

### DESCRIPTION DES FIGURES

La description qui va suivre en regard des dessins annexés, donnés à titre d'exemples non limitatifs, fera bien comprendre en quoi consiste l'invention et comment elle peut être réalisée. Sur les dessins annexés :
- la figure 1 illustre une représentation schématique d'une coupe transversale d'un rétroviseur intelligent selon l'invention ;
- la figure 2 illustre une vue de dessus, d'une représentation schématique d'un support sur lequel est montée une source de lumière, une carte graphique et un radiateur thermique, utilisés dans le rétroviseur intelligent illustré par la figure 1 ;
- la figure 3 est une représentation schématique d'une vue de derrière de la coque du rétroviseur intelligent illustré par la figure 1 ; et
- la figure 4 est une représentation schématique d'une vue de derrière du rétroviseur intelligent illustré par la figure 1.

### DESCRIPTION DETAILLEE D'UN EXEMPLE DE REALISATION

Pour rappel, la présente invention propose un rétroviseur intelligent pour véhicule automobile, comprenant un agencement de refroidissement d'un radiateur thermique, favorisant une meilleure dissipation à l'extérieur de la coque de rétroviseur, de la chaleur produite par le dispositif d'affichage vidéo.

Selon un exemple de réalisation non limitatif, illustré par les figures annexées 1 à 4, un rétroviseur intelligent 2 selon l'invention comporte une coque de rétroviseur 4 munie d'une ouverture principale 6 au niveau d'une face avant 8.

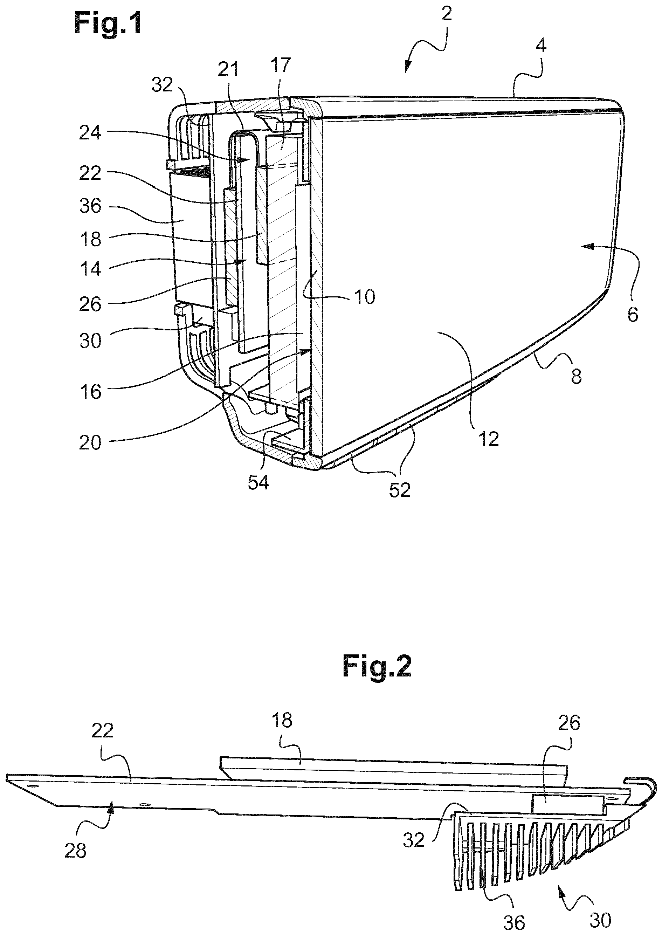

Comme illustré par la figure 1, cette ouverture principale 6 est obturée par un miroir partiellement transparent 10, dont une face avant 12, orientée vers l'extérieur de la coque de rétroviseur 4, réfléchit la lumière ambiante.

La coque 4 est par exemple réalisée en thermoplastique. En variante, la coque 4 pourrait être métallique, en étant par exemple réalisée en alliage à base d'aluminium ou à base de magnésium.

Dans l'exemple de la figure 1, le rétroviseur intelligent 2 comporte au moins une touche de commande 52, ici au niveau d'une paroi inférieure 58 de la coque de rétroviseur 4. Un circuit imprimé dédié 54, disposé ici au niveau du fond de la coque de rétroviseur 4, est relié à la touche de commande 52 de manière à détecter des commandes de l'utilisateur (ici le conducteur du véhicule).

La coque de rétroviseur 4 renferme un dispositif d'affichage vidéo 14, comprenant une matrice 16 constituée d'éléments dont la transmittance varie de façon contrôlée au cours du temps. Une face arrière de la matrice 16 est éclairée par une source de lumière, par exemple par l'intermédiaire d'un guide de lumière 17 éclairé par la source de lumière et placé en vis-à-vis de la face arrière de la matrice 16.

L'ensemble formé par la matrice 16 et la source de lumière permet de projeter une image sur une face arrière 20 du miroir partiellement transparent 10 (image qui sera visible par l'utilisateur, ici le conducteur du véhicule).

Le dispositif d'affichage vidéo 14 comprend également une carte électronique, ici une carte graphique 22. La carte graphique 22 comprend une plaque composée de fibre de verre, dont l'épaisseur est de l'ordre de 1,6 mm.

Le fonctionnement de la source de lumière et de la matrice 16 est commandé par un processeur graphique 26 porté par la carte graphique 22 et par un circuit de commande 18 (dédié en particulier à la commande de la matrice 16). Le circuit de commande 18 est ici situé entre le guide de lumière 17 et la carte graphique 22.

Le processeur graphique 26 est ici porté par une face arrière 28 de la carte graphique 22, cette face arrière 28 de la carte graphique 22 étant opposée à une face avant 24 tournée vers la matrice 16 et/ou le miroir partiellement transparent 10.

Le processeur graphique 26 et le circuit de commande 18 sont connectés entre eux, ici au moyen d'une nappe 21 visible en figure 1.

Le dispositif d'affichage vidéo 14 comporte également un radiateur thermique 30. Le radiateur thermique est ici fabriqué à base de thermoplastique, dont la conductivité thermique est égale ou supérieure à 10 W.m⁻¹.K⁻1, de préférence égale ou supérieure à 20 W.m⁻¹.K⁻¹ et/ou l'émissivité égale ou supérieure à 0,4, de préférence égale ou supérieure à 0,7. De préférence, la masse volumique du radiateur thermique 30 est de comprise entre 1 000 kg.m⁻³ et 2 000 kg.m⁻³, de préférence de l'ordre de 1560 kg.m⁻³. Le radiateur thermique peut en pratique être réalisé à partir de l'un des matériaux suivants : thermoplastiques, alliages d'aluminium, magnésium, cuivre, céramique ou autres.

Dans les modes de réalisation où le radiateur thermique 30 est réalisé en aluminium ou en alliage à base d'aluminium, la surface extérieure du radiateur thermique 30 peut par exemple être traitée par anodisation (avec éventuellement une couleur de finition noire), ce qui permet d'augmenter l'émissivité du radiateur thermique et donc le transfert thermique radiatif.

Le radiateur thermique 30 est situé dans la partie arrière de la coque 4. De ce fait, la carte graphique 22 (portant le processeur graphique 26) est interposée entre le radiateur thermique 30 et le guide de lumière 17 (éclairé par la source de lumière).

Comme illustré par la figure 2, le radiateur thermique 30 comporte une base 32 maintenue sur la carte graphique 22, ici au niveau de la face arrière 28 de la carte graphique 22, afin de favoriser un meilleur refroidissement de la carte graphique 22 (et notamment du processeur graphique 26).

Le radiateur thermique 30 peut en pratique être maintenu sur la carte graphique 22 par l'intermédiaire d'une colle, dont la conductivité thermique est égale ou supérieure 3 W.m⁻¹.K⁻¹. L'épaisseur de la couche de colle est de préférence la plus faible possible, afin de favoriser une plus grande transmission de la chaleur entre la carte graphique 22 et le radiateur thermique 30. Selon le présent exemple, la couche de colle à une épaisseur comprise entre 20 µm et 80 µm, de préférence de l'ordre de 50 µm.

Selon un autre mode de réalisation envisageable, le radiateur thermique 30 (précisément la base 32 du radiateur thermique 30) peut être monté (par vissage ou clipsage) sur la carte graphique 22.

En variante, le radiateur thermique 30 (précisément la base 32 du radiateur thermique 30) pourrait être fixé sur la coque 4, ce qui permet en particulier de limiter les vibrations et de protéger les éléments électroniques portés par la carte graphique 22 (en particulier le processeur graphique 26). On peut prévoir par ailleurs des formes complémentaires sur le radiateur thermique 30 et la coque 4 (par exemple des évidements dans le radiateur thermique 30 et formes de support dans la coque 4) afin de définir précisément le positionnement du radiateur thermique 30 dans la coque 4.

Selon une possibilité de réalisation, une pâte thermique (ou, en variante, une pastille thermiquement conductrice) peut être interposée entre le processeur graphique 26 et le radiateur thermique 30 (en étant en contact avec le processeur graphique 26 et le radiateur thermique 30). On peut par exemple utiliser une épaisseur de pâte thermique comprise entre 50 µm et 1 mm. La pâte thermique a par exemple une conductivité thermique supérieure à 1 W.m⁻¹.K⁻¹.

La base 32 présente ici une forme de plaque, dont les bords libres s'étendent au moins en partie au contact de la coque 4, ici sur tout le pourtour de la base 32 de manière à protéger le dispositif d'affichage 14 des agressions extérieures (poussière, liquides, *etc*.). En effet, la carte graphique 22 et/ou la source de lumière et/ou la matrice 16 sont alors enfermés dans un espace clos formé par la base 32 du radiateur thermique 30, une partie de la coque 4 et le miroir 10.

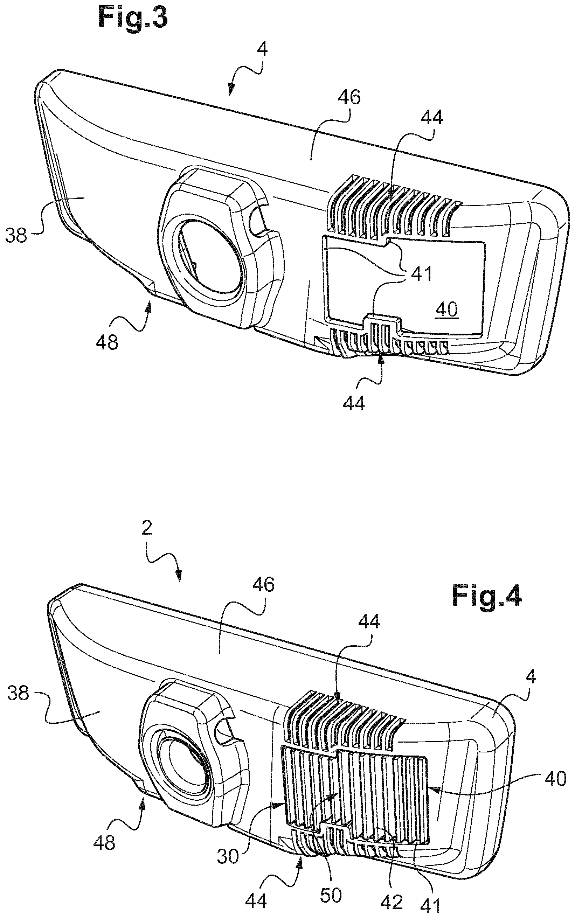

Le radiateur thermique 30 comporte des ailettes 36 s'étendant perpendiculairement ou sensiblement perpendiculairement de la base 32, afin de favoriser un transfert de chaleur thermique par un mouvement de convection naturel (transfert ascendant). Le radiateur thermique 30 comporte entre cinq et trente ailettes, selon le présent exemple quatorze ailettes 36 parallèles entre elles. Il est à noter que le nombre des ailettes dépend de préférence de la largeur du radiateur thermique 30, la hauteur des ailettes et la surface disponible dans le boîtier du rétroviseur. L'écart entre les ailettes 36 est choisi de manière à optimiser un transfert de chaleur de type radiatif et convectif. Selon le présent exemple, les ailettes sont écartées d'une distance égale ou inférieure à 8 mm, de préférence de l'ordre de 5 mm. Chaque ailette a une épaisseur de l'ordre de 2 mm, définie comme la distance séparant ses plus grandes faces. La hauteur des ailettes, définie selon une direction normale à la base du radiateur thermique 30, varie progressivement d'un bord à l'autre afin de suivre la forme de la surface externe d'une face arrière 38 de la coque de rétroviseur 4 (voir figure 3). Selon le présent exemple, la hauteur des ailettes est comprise entre 5 mm et 10 mm. La longueur des ailettes varie entre 30 mm et 50 mm, afin également de respecter la forme de la surface externe de la face arrière 38 de la coque de rétroviseur 4, comme illustré par la figure 4.

Les ailettes peuvent avoir des formes différentes, choisies par exemple parmi une base circulaire, une base carrée, une base elliptique, une base rectangulaire, une base trapézoïdale, une base rectangulaire.

Comme mentionné ci-dessus, les rétroviseurs intelligents actuels sont clos de façon hermétique, afin de protéger les composants électroniques composant le dispositif d'affichage vidéo 14, de la poussière et des projections d'eau. Or, la carte graphique 22 (en particulier le processeur graphique 26) et la source lumineuse produisent de la chaleur, s'accumulant en particulier entre le la carte graphique 22 et la matrice 16. Au-delà d'une température critique, les performances du dispositif d'affichage vidéo se dégradent ou pire, ses composants électroniques se détériorent. Ce phénomène d'accumulation de chaleur est amplifié lorsque le rétroviseur intelligent est soumis à un fort ensoleillement. La température à l'intérieur de la coque de rétroviseur peut ainsi rapidement dépasser une température de fonctionnement critique, au-delà de laquelle le rétroviseur ne fonctionne plus convenablement.

La présente invention répond à cette problématique en proposant une solution de refroidissement du radiateur thermique 30 illustré à la figure 3, comprenant une ouverture secondaire 40 de la coque 4, ici au niveau de la face arrière 38 de la coque de rétroviseur 4. L'ouverture secondaire 40 est ménagée de sorte que ses bords 41 entourent les sommets 42 des ailettes 36 du radiateur thermique 30 comme illustré par la figure 4. Autrement dit, les sommets 42 des ailettes affleurent au niveau de la surface de la face arrière 38 de la coque de rétroviseur 4, afin de préserver au mieux l'aspect esthétique des contours de ladite coque 4. Ainsi, de façon avantageuse, on favorise l'établissement d'un flux d'air entre l'extérieur de la coque de rétroviseur 4 et le radiateur thermique 30, permettant d'éviter une accumulation de chaleur dans ladite coque 4 et un refroidissement nettement plus efficace du radiateur thermique 30. De ce fait, dans les mêmes conditions d'utilisation, l'invention permet une élévation bien moindre de la température à l'intérieur du rétroviseur intelligent 2 par rapport à l'état de la technique. Un rétroviseur intelligent 2 selon l'invention est ainsi plus performant dans des conditions d'utilisation plus extrêmes. Selon un autre avantage de l'invention, le radiateur thermique 30 ne dépasse pas de la coque de rétroviseur 4 ce qui permet de préserver l'esthétisme de ladite coque.

Les bords 41 de l'ouverture secondaire sont agencés de sorte à être distants et suivre le contour de chaque côté du radiateur thermique 30. L'écart entre les bords 41 et les ailettes 36 est inférieur à 1 mm, de préférence compris entre 0,8 mm et 1 mm. Cet écart est choisi de sorte à favoriser une meilleure circulation de l'air entre l'intérieur et l'extérieur de la coque du rétroviseur 4, tout en empêchant le passage de poussière et de projection d'eau entre la coque de rétroviseur 4 et le radiateur thermique 30 afin d'être conforme à la norme IP42.

Selon le présent exemple illustré par la figure 3, la coque de rétroviseur 4 comporte également des fentes 44 à proximité de l'ouverture secondaire 40, dont la largeur est égale ou inférieure à 1 mm, de préférence compris entre 0,8 mm et 1 mm, afin d'être conforme à la norme IP42. Les fentes 44 sont parallèles ou sensiblement parallèles aux ailettes 36 du radiateur thermique 30 comme illustré par la figure 4. Les fentes 44 s'étendent en partie au moins, sur une paroi supérieure 46 et sur la paroi inférieure 48 de la coque de rétroviseur 4, toutes deux adjacentes à sa face avant 8, afin de favoriser une plus grande dissipation de la chaleur au niveau de la source de lumière et/ou de la matrice 16. De préférence, les fentes 44 sont également alignées ou sensiblement alignées avec des passages 50 délimités par les ailettes 36, de sorte à favoriser écoulement d'air de type laminaire entre les fentes et les ailettes 36. On favorise ainsi un refroidissement plus efficace du radiateur thermique 30.

Selon une variante de réalisation non représentée, la surface extérieure de la coque de rétroviseur 4 et/ou du radiateur thermique 30, est recouverte par une couche de nature métallique, de préférence par du magnésium ou de l'aluminium. La présence de cette couche métallique améliore l'émissivité de ces dispositifs ainsi que les problèmes de frottement mécanique lors de leur utilisation. Ainsi, le phénomène d'échauffement du rétroviseur intelligent, dû à une exposition à un flux solaire, est limité.

Selon une autre variante de réalisation non illustrée, le radiateur thermique 30 peut être couplé avec un moyen de refroidissement actif, du type ventilateur ou un élément mettant en oeuvre un effet Peltier.

## Revendications

1. Rétroviseur intelligent (2) pour véhicule automobile, comprenant une coque de rétroviseur (4) munie d'une ouverture principale (6) au niveau d'une face avant (8), l'ouverture principale (6) étant obturée par un miroir (10) au moins partiellement transparent, le miroir (10) comportant une face avant (12) orientée vers l'extérieur de ladite coque et réfléchissant au moins partiellement la lumière ambiante, la coque de rétroviseur (4) renfermant un dispositif d'affichage vidéo (14) comprenant :
- une matrice (16) constituée d'éléments dont la transmittance varie de façon contrôlée au cours du temps ; et
- une source de lumière apte à éclairer la matrice (16) afin de former une image rétroéclairant une face arrière du miroir (10), de sorte que l'image soit visible au niveau de la face avant (12) du miroir (10) ;
- une carte électronique (22) ; et
- un radiateur thermique (30) agencé au niveau d'une face arrière (28) de la carte électronique (22) ;
le rétroviseur intelligent (2) comportant une ouverture secondaire (40) au niveau de la coque de rétroviseur (4), l'ouverture secondaire (40) comportant des bords (41) entourant au moins partiellement le radiateur thermique (30), de manière à favoriser une dissipation à l'extérieur de ladite coque de la chaleur émise par le radiateur thermique (30), le radiateur thermique (30) comportant une base (32) et des ailettes (36) s'étendent perpendiculairement ou sensiblement perpendiculairement à la base (32), l'ouverture secondaire (40) entourant au moins une ailette (36) du radiateur thermique (30), le sommet (42) d'au moins une ailette (36) affleurant la surface extérieure de la coque de rétroviseur (4), **caractérisé en ce que** la coque de rétroviseur (4) comporte au moins une fente (44) à proximité de l'ouverture secondaire (40), dont la largeur est égale ou inférieure à 1 mm, **en ce que** l'au moins une fente (44) est parallèle ou sensiblement parallèle à une ailette (36) du radiateur thermique (30), et **en ce que** l'au moins une fente (44) s'étend sur une paroi adjacente (46) à la face avant (8) de la coque de rétroviseur (4).

2. Rétroviseur intelligent (2) selon la revendication 1, **caractérisé en ce que** l'écart entre les bords (41) de l'ouverture secondaire (40) et le radiateur thermique (30) est inférieur à 1 mm.

3. Rétroviseur intelligent (2) selon l'une des revendications précédentes, **caractérisé en ce que** le radiateur thermique (30) est composé d'un thermoplastique.

4. Rétroviseur intelligent (2) selon la revendication précédente, **caractérisé en ce que** le thermoplastique a une conductivité thermique égale ou supérieure à 10 W. m⁻¹.K⁻¹ ou une émissivité égale ou supérieure à 0,4.

5. Rétroviseur intelligent (2) selon l'une des revendications 1 à 4, dans lequel le radiateur thermique (30) est fixé sur la carte électronique (22).

6. Rétroviseur intelligent (2) selon l'une des revendications 1 à 4, dans lequel le radiateur thermique (30) est fixé sur la coque (4).

7. Rétroviseur intelligent (2) selon l'une des revendications précédentes, **caractérisé en ce que** la base (32) a une forme de plaque et **en ce que** les bords de la base (32) s'étendent au contact de la coque (4).

8. Rétroviseur intelligent (2) pour véhicule automobile selon l'une des revendications précédentes, **caractérisé en ce que** les ailettes (36) s'étendent perpendiculairement ou sensiblement perpendiculairement à la face de la coque délimitant l'ouverture secondaire (40).

9. Rétroviseur intelligent (2) pour véhicule automobile selon l'une des revendications précédentes, **caractérisé en ce que** l'ouverture secondaire (40) est située au niveau d'une face arrière (38) de la coque de rétroviseur (4).

10. Rétroviseur intelligent (2) pour véhicule automobile selon l'une des revendications précédentes, **caractérisé en ce que** la surface extérieure de la coque de rétroviseur (4) ou du radiateur thermique (30) est recouverte par une couche de nature métallique.

## Patentansprüche

1. Intelligenter Rückspiegel (2) für ein Kraftfahrzeug, umfassend eine Rückspiegelschale (4), die mit einer Hauptöffnung (6) an einer Vorderseite (8) versehen ist, wobei die Hauptöffnung (6) von einem mindestens teilweise transparenten Spiegel (10) verschlossen wird, wobei der Spiegel (10) eine Vorderseite (12) beinhaltet, die nach außerhalb der Schale ausgerichtet ist und das Umgebungslicht mindestens teilweise reflektiert, wobei die Rückspiegelschale (4) eine Videoanzeigevorrichtung (14) umschließt, umfassend:
- eine Matrix (16), die aus Elementen aufgebaut ist, deren Transmissionsgrad im Laufe der Zeit kontrolliert variiert; und
- eine Lichtquelle, die geeignet ist, die Matrix (16) zu beleuchten, um ein Bild zu bilden, das eine Rückseite des Spiegels (10) hinterleuchtet, so dass das Bild an der Vorderseite (12) des Spiegels (10) sichtbar ist;
- eine Leiterplatte (22); und
- einen Wärmestrahler (30), der an einer Rückseite (28) der Leiterplatte (22) angeordnet ist;
wobei der intelligente Rückspiegel (2) eine Nebenöffnung (40) an der Rückspiegelschale (4) beinhaltet, wobei die Nebenöffnung (40) Ränder (41) beinhaltet, die den Wärmestrahler (30) mindestens teilweise umgeben, so dass eine Ableitung der von dem Wärmestrahler (30) abgegebenen Wärme nach außerhalb der Schale begünstigt wird, wobei der Wärmestrahler (30) eine Basis (32) beinhaltet und Rippen (36), die sich senkrecht oder im Wesentlichen senkrecht zu der Basis (32) erstrecken, wobei die Nebenöffnung (40) mindestens eine Rippe (36) des Wärmestrahlers (30) umgibt, wobei der Scheitelpunkt (42) mindestens einer Rippe (36) bündig mit der Außenoberfläche der Rückspiegelschale (4) ist, **dadurch gekennzeichnet, dass** die Rückspiegelschale (4) mindestens einen Schlitz (44) in der Nähe der Nebenöffnung (40) beinhaltet, dessen Breite gleich oder kleiner als 1 mm ist, dass der mindestens eine Schlitz (44) parallel oder im Wesentlichen parallel zu einer Rippe (36) des Wärmestrahlers (30) ist und dass sich der mindestens eine Schlitz (44) in einer Nachbarwand (46) zur Vorderseite (8) der Rückspiegelschale (4) erstreckt.

2. Intelligenter Rückspiegel (2) nach Anspruch 1, **dadurch gekennzeichnet, dass** der Abstand zwischen den Rändern (41) der Nebenöffnung (40) und dem Wärmestrahler (30) weniger als 1 mm beträgt.

3. Intelligenter Rückspiegel (2) nach einem der vorhergehenden Ansprüche, **dadurch gekennzeichnet, dass** der Wärmestrahler (30) aus einem Thermoplast besteht.

4. Intelligenter Rückspiegel (2) nach dem vorhergehenden Anspruch, **dadurch gekennzeichnet, dass** der Thermoplast eine Wärmeleitfähigkeit gleich oder größer als 10 W.m⁻¹.K⁻¹ oder eine Emissivität gleich oder größer als 0,4 hat.

5. Intelligenter Rückspiegel (2) nach einem der Ansprüche 1 bis 4, bei dem der Wärmestrahler (30) auf der Leiterplatte (22) befestigt ist.

6. Intelligenter Rückspiegel (2) nach einem der Ansprüche 1 bis 4, bei dem der Wärmestrahler (30) auf der Schale (4) befestigt ist.

7. Intelligenter Rückspiegel (2) nach einem der vorhergehenden Ansprüche, **dadurch gekennzeichnet, dass** die Basis (32) eine Plattenform hat und dass sich die Ränder (32) der Basis in Kontakt mit der Schale (4) erstrecken.

8. Intelligenter Rückspiegel (2) für ein Kraftfahrzeug nach einem der vorhergehenden Ansprüche, **dadurch gekennzeichnet, dass** sich die Rippen (36) senkrecht oder im Wesentlichen senkrecht zu der die Nebenöffnung (40) der Schale begrenzenden Seite erstrecken.

9. Intelligenter Rückspiegel (2) für ein Kraftfahrzeug nach einem der vorhergehenden Ansprüche, **dadurch gekennzeichnet, dass** die Nebenöffnung (40) an einer Rückseite (38) der Rückspiegelschale (4) gelegen ist.

10. Intelligenter Rückspiegel (2) für ein Kraftfahrzeug nach einem der vorhergehenden Ansprüche, **dadurch gekennzeichnet, dass** die Außenoberfläche der Rückspiegelschale (4) oder des Wärmestrahlers (30) mit einer Schicht metallischer Natur überzogen ist.

## Claims

1. Smart rear-view mirror (2) for a motor vehicle, comprising a rear-view mirror shell (4) provided with a main opening (6) at a front face (8), the main opening (6) being closed off by a mirror (10) that is at least partially transparent, the mirror (10) having a front face (12) oriented towards the outside of said shell and at least partially reflecting ambient light, the rear-view mirror shell (4) enclosing a video display device (14) comprising:
- a matrix (16) constituted of elements of which the transmittance varies in a controlled manner over time; and
- a light source that is able to illuminate the matrix (16) in order to form an image backlighting a rear face of the mirror (10), such that the image is visible at the front face (12) of the mirror (10);
- a circuit board (22); and
- a thermal radiator (30) arranged at a rear face (28) of the circuit board (22);
the smart rear-view mirror (2) having a secondary opening (40) at the rear-view mirror shell (4), the secondary opening (40) having edges (41) at least partially surrounding the thermal radiator (30), so as to promote dissipation to the outside of said shell of the heat emitted by the thermal radiator (30), the thermal radiator (30) having a base (32) and fins (36) extending perpendicular or substantially perpendicular to the base (32), the secondary opening (40) surrounding at least one fin (36) of the thermal radiator (30), the tip (42) of at least one fin (36) being flush with the outer surface of the rear-view mirror shell (4), **characterized in that** the rear-view mirror shell (4) has at least one slot (44) near the secondary opening (40), of which the width is equal to or less than 1 mm, **in that** the at least one slot (44) is parallel or substantially parallel to a fin (36) of the thermal radiator (30), and **in that** the at least one slot (44) extends over a wall (46) that is adjacent to the front face (8) of the rear-view mirror shell (4).

2. Smart rear-view mirror (2) according to Claim 1, **characterized in that** the spacing between the edges (41) of the secondary opening (40) and the thermal radiator (30) is less than 1 mm.

3. Smart rear-view mirror (2) according to either of the preceding claims, **characterized in that** the thermal radiator (30) is made of a thermoplastic.

4. Smart rear-view mirror (2) according to the preceding claim, **characterized in that** the thermoplastic has a thermal conductivity equal to or greater than 10 W.m⁻¹.K⁻¹ or an emissivity equal to or greater than 0.4.

5. Smart rear-view mirror (2) according to one of Claims 1 to 4, wherein the thermal radiator (30) is fastened to the circuit board (22).

6. Smart rear-view mirror (2) according to one of Claims 1 to 4, wherein the thermal radiator (30) is fastened to the shell (4) .

7. Smart rear-view mirror (2) according to one of the preceding claims, **characterized in that** the base (32) is in the form of a plate and **in that** the edges of the base (32) extend in contact with the shell (4).

8. Smart rear-view mirror (2) for a motor vehicle according to one of the preceding claims, **characterized in that** the fins (36) extend perpendicular or substantially perpendicular to the face of the shell delimiting the secondary opening (40).

9. Smart rear-view mirror (2) for a motor vehicle according to one of the preceding claims, **characterized in that** the secondary opening (40) is situated at a rear face (38) of the rear-view mirror shell (4).

10. Smart rear-view mirror (2) for a motor vehicle according to one of the preceding claims, **characterized in that** the outer surface of the rear-view mirror shell (4) or of the thermal radiator (30) is covered by a layer of metallic nature.
